# EUROPÄISCHE PATENTSCHRIFT

(11) **EP 3 325 214 B1**
(45) Veröffentlichungstag und Bekanntmachung des Hinweises auf die Patenterteilung: **03.10.2018**
(21) Anmeldenummer: 17783766.3
(22) Anmeldetag: 26.09.2017
(51) Int. Cl.: B24B 27/00, B24B 41/00, B25J 11/00

(54) **WERKZEUGMASCHINE ZUM ROBOTERGESTÜTZTEN BEARBEITEN VON OBERFLÄCHEN**
MACHINE TOOL FOR ROBOT-ASSISTED SURFACE FINISHING
MACHINE-OUTIL ASSISTÉE PAR UN ROBOT POUR LE TRAITEMENT DE SURFACES

(30) Priorität: 26.09.2016 DE 102016118173
(43) Veröffentlichungstag der Anmeldung: 30.05.2018
(73) Patentinhaber: Ferrobotics Compliant Robot Technology GmbH, 4040 Linz (AT)
(72) Erfinder: NADERER, Ronald, 4181 Oberneukirchen (AT)
(74) Vertreter: Westphal, Mussgnug & Partner Patentanwälte mbB
(86) Internationale Anmeldenummer: PCT/EP2017/074327
(87) Internationale Veröffentlichungsnummer: WO 2018/055189

(56) Entgegenhaltungen:
- WO-A1-2016/145472
- CN-A- 105 196 296
- DE-A1-102011 006 679

## Beschreibung

### TECHNISCHES GEBIET

Die vorliegende Erfindung betrifft eine von einem Roboter geführte Werkzeugmaschine für die robotergestützte Bearbeitung von Oberflächen, beispielsweise eine Schleifmaschine oder eine Poliermaschine.

### HINTERGRUND

In der Oberflächenbearbeitung von Werkstücken spielen Schleif- und Polierprozesse eine zunehmend wichtige Rolle. In der automatisierten, robotergestützten Fertigung werden Industrieroboter eingesetzt, mit deren Hilfe z.B. Schleifprozesse automatisiert werden können. In der Publikation DE 10 2011 006 679 A1 ist eine Handhabungsvorrichtung mit einem Linearaktor für robotergestützte Kontaktaufgaben wie beispielsweise robotergestütztes Schleifen beschrieben. In der Publikation CN 105196296 A ist die Anwendung der Handhabungsvorrichtung aus der erstgenannten Publikation beim robotergestützten Schleifen beschrieben. Dabei wird die Handhabungsvorrichtung dazu verwendet, die Schleifkraft zu regeln. Die Publikation WO 2016/145472 A1 betrifft ebenfalls die Anwendung der Handhabungsvorrichtung aus der erstgenannten Publikation, wobei mit der Handhabungsvorrichtung eine herkömmliche Orbitalschleifmaschine gekoppelt ist.

Bei robotergestützten Schleifvorrichtungen wird eine Schleifmaschine mit rotierendem Schleifwerkzeug (z.B. Schleifscheibe) von einem Manipulator, beispielsweise einem Industrieroboter, geführt. Der sogenannte TCP (*Tool Center Point*) des Manipulators bewegt sich während des Schleifprozesses entlang einer (vorab z.B. mittels Teach-In programmierbaren) Bahn (Trajektorie). Die vorgegebene Bahn des TCP definiert für jeden Zeitpunkt Position und Orientierung des TCP und damit der Schleifmaschine. Die Robotersteuerung, die die Bewegung des Manipulators steuert beinhaltet daher in der Regel eine Positionsregelung.

Für oberflächenbearbeitende Prozesse wie beispielsweise Fräsen, Schleifen, Polieren, etc. ist eine Positionsregelung des Werkzeugs meist nicht ausreichend, da die Prozesskraft (die Kraft zwischen Werkzeug und Werkstück) für das Bearbeitungsergebnis eine wichtige Rolle spielt. Daher ist das Werkzeug in der Regel nicht starr mit dem TCP des Manipulators verbunden sondern über ein elastisches Element, das im einfachsten Fall eine Feder sein kann. Um die Prozesskraft einstellen zu können, ist in vielen Fällen eine Regelung (*closed-loop control*) der Prozesskraft nötig. Zur Implementierung einer Kraftregelung kann das elastische Element ein separater Linearaktor sein, der mechanisch zwischen TCP des Manipulators und das Werkzeug (z.B. zwischen TCP und einer Schleifmaschine, an der eine Schleifscheibe montiert ist) gekoppelt ist. Der Linearaktor kann im Vergleich zum Manipulator relativ klein sein und wird im Wesentlichen für die Regelung der Prozesskraft verwendet, während der Manipulator das Werkzeug (samt Linearaktor) positionsgeregelt entlang der zuvor programmierten Trajektorie bewegt.

Eine der vorliegenden Erfindung zugrunde liegende Aufgabe kann darin gesehen werden, eine verbesserte Werkzeugmaschine wie z.B. eine Schleifmaschine zur Verfügung zu stellen, die für eine robotergestützte Bearbeitung von Oberflächen geeignet ist.

### ZUSAMMENFASSUNG

Die oben genannte Aufgabe wird durch die Vorrichtung gemäß Anspruch 1 gelöst. Verschiedene Ausführungsbeispiele und Weiterentwicklungen der Erfindung sind Gegenstand der abhängigen Ansprüche.

Es wird eine Vorrichtung für eine Werkzeugmaschine beschrieben, die gemäß einem Ausführungsbeispiel eine erste Trägerplatte und eine zweite Trägerplatte aufweist; die erste Trägerplatte ist zur Montage an einem Manipulator sowie zur Montage eines Motors ausgebildet. An der zweiten Trägerplatte ist eine Abtriebswelle zur Aufnahme eines rotierbaren Werkzeugs gelagert. Die Werkzeugmaschine weist des Weiteren einen Linearaktor, der zwischen der ersten Trägerplatte und der zweiten Trägerplatte wirkt, sowie weiter eine Teleskopwelle mit einem ersten Wellenteil und einem zweiten Wellenteil auf, der relativ zum ersten Wellenteil verschiebbar ist. Der erste Wellenteil ist zum Koppeln mit einer Motorwelle des Motors ausgebildet, und der zweite Wellenteil ist an der zweiten Trägerplatte gelagert. Die Teleskopwelle ist mit der Abtriebswelle über ein Getriebe gekoppelt.

Es wird eine Werkzeugmaschine zum robotergestützten Bearbeiten von Oberflächen beschrieben. Gemäß einem Ausführungsbeispiel weist die Werkzeugmaschine eine erste Trägerplatte und eine zweite Trägerplatte auf. Die erste Trägerplatte ist zur Montage an einem Manipulator ausgebildet. An der zweiten Trägerplatte ist eine Abtriebswelle zur Aufnahme eines rotierbaren Werkzeugs gelagert. Die Werkzeugmaschine weist des Weiteren einen Linearaktor, der zwischen der ersten Trägerplatte und der zweiten Trägerplatte wirkt, sowie einen Motor auf, der an der ersten Trägerplatte montiert ist. Die Werkzeugmaschine weist weiter eine Teleskopwelle mit einem ersten Wellenteil und einem zweiten Wellenteil auf, der relativ zum ersten Wellenteil verschiebbar ist. Der erste Wellenteil ist mit einer Motorwelle des Motors gekoppelt, und der zweite Wellenteil ist an der zweiten Trägerplatte gelagert. Die Teleskopwelle ist mit der Abtriebswelle über ein Getriebe gekoppelt.

### KURZE BESCHREIBUNG DER ABBILDUNGEN

Die Erfindung wird nachfolgend anhand von den in den Abbildungen dargestellten Beispielen näher erläutert. Die Darstellungen sind nicht zwangsläufig maßstabsgetreu und die Erfindung beschränkt sich nicht nur auf die dargestellten Aspekte. Vielmehr wird Wert darauf gelegt, die der Erfindung zugrunde liegenden Prinzipien darzustellen. Zu den Abbildungen:

Figur 1 ist eine exemplarische schematische Darstellung einer robotergestützten Schleifvorrichtung mit einer Schleifmaschine, die mit einem Industrieroboter mittels eines kraftgeregelten Linearaktors gekoppelt ist; der Linearaktor bewirkt eine mechanische Entkopplung von Industrieroboter und Schleifmaschine.

Figur 2 illustriert ein exemplarisches Ausführungsbeispiel einer Werkzeugmaschine mit integriertem Linearaktor zur mechanischen Entkopplung einer Antriebsseite und einer Werkzeugseite der Werkzeugmaschine.

Figur 3 illustriert ein weiteres Ausführungsbeispiel einer Werkzeugmaschine mit mechanisch entkoppelter Antriebsseite und Werkzeugseite.

Figur 4 illustriert das Beispiel aus Fig. 3 jedoch mit größerer Auslenkung das Linearaktors als in Fig. 3

### DETAILLIERTE BESCHREIBUNG

Bevor verschiedene Ausführungsbeispiele im Detail erläutert werden, wird zunächst ein allgemeines Beispiel einer robotergestützten Schleifvorrichtung beschrieben. Die hier beschriebenen Ausführungsbeispiele beschränken sich jedoch nicht auf Schleifvorrichtungen. Die hier beschriebenen Vorrichtungen können für die robotergestützte Durchführung verschiedenster Bearbeitungsprozesse, bei denen ein rotierendes Werkzeug zum Einsatz kommt, angewendet werden (z.B. sämtliche spanabhebende Fertigungsprozesse wie z.B. Fräsen, Schleifen, Polieren und dgl.).

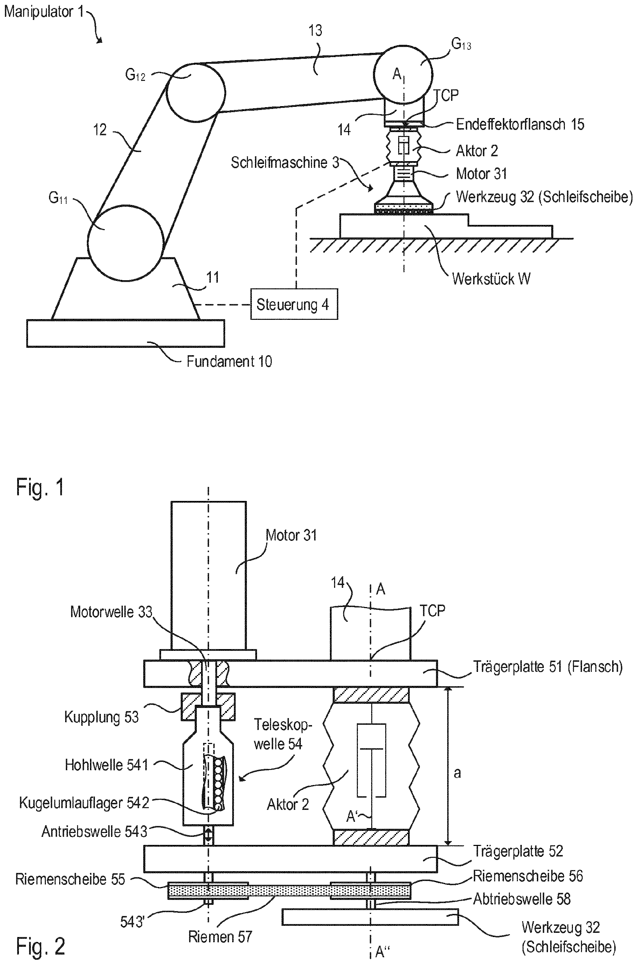

Das in Fig. 1 dargestellte Beispiel umfasst einen Manipulator 1 (beispielsweise einen Industrieroboter) und eine Werkzeugmaschine 3 (z.B. Schleifmaschine), die einen Motor 31 und ein rotierendes Werkzeug 32 (z.B. Schleifscheibe) aufweist. Die Schleifmaschine 3 ist mit dem Endeffektorflansch 15 des Manipulators 1 (am *Tool-Center-Point* (TCP)) über einen Linearaktor 2 gekoppelt. Im Falle eines Industrieroboters mit sechs Freiheitsgraden kann der Manipulator aus vier Segmenten 11, 12, 13 und 14 aufgebaut sein, die jeweils über Gelenke G₁₁, G₁₂ und G₁₃ verbunden sind. Das erste Segment 11 ist dabei meist starr mit einem Fundament 10 verbunden (was jedoch nicht zwangsläufig der Fall sein muss). Das Gelenk G₁₃ verbindet die Segmente 13 und 14. Das Gelenk G₁₃ kann 2-achsig sein und eine Drehung des Segments 14 (relativ zum Segment 13) um eine horizontale Drehachse (Elevationswinkel) und eine vertikale Drehachse (Azimutwinkel) ermöglichen. Das Gelenk G₁₂ verbindet die Segmente 12 und 13 und ermöglicht eine Schwenkbewegung des Segments 13 relativ zur Lage des Segments 12. Das Gelenk G₁₁ verbindet die Segmente 11 und 12. Das Gelenk G₁₁ kann 2-achsig sein und daher (ähnlich wie das Gelenk G₁₃) eine Schwenkbewegung in zwei Richtungen ermöglichen. Der TCP hat eine feste Relativposition zum Segment 14, wobei dieses üblicherweise noch ein Drehgelenk (nicht dargestellt) umfasst, dass eine Drehbewegung um eine Längsachse A des Segments 14 ermöglicht (in Fig. 1 als strichpunktierte Line eingezeichnet). Der Manipulator 1 hat damit insgesamt 6 Freiheitsgrade. Jeder Achse eines Gelenks ist ein Aktor zugeordnet, der eine Drehbewegung um die jeweilige Gelenksachse bewirken kann. Die Aktoren in den Gelenken werden von einer Robotersteuerung 4 gemäß einem Roboterprogramm angesteuert. Der TCP kann (in bestimmten Grenzen) beliebig positioniert werden (mit beliebiger Orientierung der Achse A).

Der Manipulator 1 ist üblicherweise positionsgeregelt, d.h. die Robotersteuerung 4 kann die Pose (Position und Orientierung) des TCP festlegen und diesen entlang einer vordefinierten Trajektorie bewegen. Wenn der Aktor 2 an einem Endanschlag anliegt, ist mit der Pose des TCP auch die Pose des Werkzeugs 32 (und der gesamten Schleifmaschine 3) definiert. Der Aktor 2 dient dazu, während des Schleifprozesses die Kontaktkraft F_{K} (Prozesskraft) zwischen Werkzeug 32 und Werkstück W auf einen gewünschten Wert einzustellen. Eine direkte Regelung der Prozesskraft durch den Manipulator 1 ist für Schleifanwendungen üblicherweise zu ungenau, da durch die hohe Massenträgheit der Segmente 11 bis 14 des Manipulators 1 eine schnelle Kompensation von Kraftspitzen (z.B. beim Aufsetzen des Schleifwerkzeugs auf das Werkstück W) mit herkömmlichen Manipulatoren praktisch nicht möglich ist. Aus diesem Grund ist die Robotersteuerung dazu ausgebildet, die Pose (Position und Orientierung) des TCP zu regeln, während die Regelung der Kontaktkraft F_{K} ausschließlich vom Aktor 2 bewerkstelligt wird, der zwischen Schleifmaschine 3 und Manipulator 1 gekoppelt ist. Aufgrund der Kraftregelung ist der Aktor 2 in der Lage, während des Schleifprozesses (entlang der Wirkrichtung des Aktors 2) Abweichungen in Position und Lage des Werkstücks W relativ zum Werkzeug 32 auszugleichen und gleichzeitig die gewünschte Prozesskraft F_{K} aufrechterhalten. Die erwähnten Abweichungen können z.B. durch Fehler in der Positionierung des Werkstückes oder Ungenauigkeiten in der Positionierung des TCP (aufgrund von Toleranzen) verursacht werden.

Wie bereits erwähnt kann während des Schleifprozesses die Kontaktkraft F_{K} zwischen Werkzeug 32 und Werkstück W mit Hilfe des (Linear-) Aktors 2 und einer Kraftregeleinheit (die beispielsweise in der Steuerung 4 implementiert sein kann) so eingestellt werden, dass die Kontaktkraft F_{K} zwischen Schleifwerkzeug 32 und Werkstück W einem vorgebbaren Sollwert entspricht. Die Kontaktkraft ist dabei eine Reaktion auf die Aktorkraft F_{A}, mit der der Linearaktor 2 auf die Werkstückoberfläche drückt. Bei fehlendem Kontakt zwischen Werkstück W und Werkzeug 32 fährt der Aktor 2 aufgrund der fehlenden Kontaktkraft F_{K} gegen einen Endanschlag (in Fig. 1 nicht dargestellt oder in den Aktor 2 integriert). Die Positionsregelung des Manipulators 1 (die ebenfalls in der Steuerung 4 implementiert sein kann) kann vollkommen unabhängig von der Kraftregelung des Aktors 2 arbeiten. Der Aktor 2 ist nicht verantwortlich für die Positionierung der Schleifmaschine 3, sondern lediglich für das Einstellen und Aufrechterhalten der erwünschten Kontaktkraft F_{K} während des Schleifprozesses und zur Erkennung von Kontakt zwischen Werkzeug 32 und Werkstück W. Ein Kontakt kann z.B. erkannt werden, wenn die Auslenkung des Aktors 2 ausgehend vom Endanschlag kleiner wird, oder die Änderung der Auslenkung des Aktors 2 negativ wird.

Generell besteht bei robotergestützten bzw. automatisierten Systemen, bei denen der Roboter einen Gegenstand (z.B. Werkstück W) berührt das Problem, den Kontaktzeitpunkt zu erkennen und die Kontaktkraft zu regeln. Eine Kontaktkraftregelung ist erst möglich, nachdem der Roboter die Oberfläche des Gegenstandes kontaktiert hat. Aus diesem Grund tritt bei allen bekannten, kraftgeregelten Systemen zunächst beim Kontakt zwischen dem am Roboter gelagerten Werkzeug und der zu kontaktierenden Oberfläche eine stoßförmige Kontaktkraft auf. Bei dieser Kollision wirkt nicht nur die Masse (d.h. die Trägheitskräfte und damit die kinetische Energie) des Werkzeugs (siehe Fig. 1, Schleifmaschine 3) und des Aktors (siehe Fig. 1, Aktor 2), sondern auch die Masse bzw. die kinetische Energie des gesamten Manipulators samt dessen Antriebe. Diese Masse bestimmt im Wesentlichen die (zu vermeidende) Aufprallenergie.

Die resultierende stoßförmige Kontaktkraft mag in vielen Fällen unproblematisch sein, kann jedoch in Anwendungen, bei denen Präzision wichtig ist oder sehr empfindliche Werkstücke be- oder verarbeitet werden müssen, störend und unerwünscht sein. Das heißt, es kommt zu einem Überschwingen der Ist-Kontaktraft im Vergleich zur Soll-Kontaktraft. Auch während der Bearbeitung einer Oberfläche kann es sein, dass die Position des Werkzeugs nachjustiert werden muss, um die Soll-Kontaktkraft aufrechtzuerhalten. In diesem Fall sind es vor allem Haftreibungseffekte (der so-genannte "Stick-Slip-Effekt") welche zu transienten Überschwingen im Kontaktkraftverlauf führen können. Des Weiteren kann bei getriebebehafteten Antrieben das Ineinander-greifen der Zähne der Getrieberäder unerwünschte ruckartige Stöße oder Schwingungen verursachen. Beim Handhaben oder Bearbeiten von Gegenständen können beide Effekte zu Qualitätsproblemen führen.

Das oben erläuterte Überschwingen kann dadurch reduziert werden, dass die Werkzeugmaschine (z.B. eine Schleifmaschine) vom Manipulator 1 mechanisch entkoppelt wird. Diese Entkopplung kann z.B. mittels einer Feder erreicht werden. In dem im Fig. 1 dargestellten Beispiel erfolgt diese Entkopplung mittels des Aktors 2. Der Aktor 2 kann ein pneumatischer Aktor sein, z.B. ein doppeltwirkender Pneumatikzylinder. Jedoch sind auch andere pneumatische Aktoren anwendbar wie z.B. Balgzylinder und Luftmuskel. Als Alternative kommen auch elektrische Direktantriebe (getriebelos) in Betracht. Im Falle eines pneumatischen Aktors kann die Kraftregelung in an sich bekannter Weise mit Hilfe eines Regelventils, eines Reglers (implementiert in der Steuerung 4) und eines Druckluftspeichers realisiert werden. Die konkrete Implementierung ist jedoch für die weitere Erläuterung nicht wichtig und wird daher auch nicht detaillierter beschrieben. In den hier beschriebenen Beispielen ist der Aktor 2 im Wesentlichen haftreibungsfrei, um den erwähnten Stick-Slip-Effekt zu vermeiden oder möglichst klein zu halten. "Im Wesentlichen haftreibungsfrei" bedeutet dabei nicht eine Haftreibung von Null, jedoch eine im Vergleich zur Aktorkraft vernachlässigbar kleine Haftreibung. Bei vollständiger Entkopplung zwischen Werkzeugmaschine und Manipulator wirken die Massenträgheitskräfte des Manipulators nicht mehr auf die kontaktierte Oberfläche.

Trotz der erwähnten mechanischen Entkopplung von Manipulator und Werkzeug durch verbleiben dennoch die Massenträgheitskräfte der Werkzeugmaschine, welche auf die Oberfläche des kontaktierten Werkstücks wirken können. Bei hohen Prozesskräften (z.B. Schleifkräften zwischen Schleifscheibe und Werkstück) benötigt die Werkzeugmaschine in der Regel einen leistungsstarken Motor (z.B. ein Elektromotor), der eine entsprechend große Masse aufweist. Im Übrigen muss der Aktor 2 auf das Gewicht der Werkzeugmaschine (inklusive Motor) abgestimmt sein, da der Aktor bei der Kraftregelung in der Regel die Gewichtskraft der Werkzeugmaschine (zumindest teilweise) kompensieren muss.

Gemäß dem vorherigen Beispiel aus Fig. 1 ist der Aktor 2 zwischen Manipulator 1 und Werkzeugmaschine 3 angeordnet. Fig. 2 zeigt ein exemplarisches Beispiel einer Werkzeugmaschine 3 (z.B. eine Schleifmaschine) mit integriertem Aktor 2. Die Integration des Aktors in die Werkzeugmaschine ermöglicht eine mechanische Entkopplung zwischen einer Antriebsseite, an der der (vergleichsweise schwere) Motor 31 angeordnet ist, und einer Werkzeugseite, an der das (vergleichsweise leichte) Werkzeug 32 (z.B. eine Schleifscheibe) angeordnet ist. Wenn die Werkzeugmaschine 3 aus Fig. 2 mit ihrer Antriebsseite an einem Endeffektorflansch (vgl. Fig. 1, Ziffer 15) eines Manipulators montiert ist, wird das Gewicht aller Komponenten (inkl. das Gewicht des Motors 31) auf der Antriebsseite der Werkzeugmaschine 3 vom Manipulator aufgenommen und lediglich die vergleichsweise kleine Masse der Komponenten auf der Werkzeugseite muss von dem integrierten Aktor 2 bewegt werden.

Gemäß dem in Fig. 2 dargestellten Beispiel weist die Werkzeugmaschine 3 eine erste Trägerplatte 51 und eine zweite Trägerplatte 52 auf. Die erste Trägerplatte 51 ist so ausgeführt, dass sie an einem Manipulator montiert werden kann, beispielsweise an dem Endeffektorflansch 15 des Manipulators 1 aus Fig. 1. An der zweiten Trägerplatte 52 ist eine Abtriebswelle 58 gelagert. Im Betrieb kann an der Abtriebswelle 58 ein rotierbares Werkzeugs 32 montiert sein, beispielsweise eine Schleifscheibe. Zwischen den beiden Trägerplatten 51 und 52 ist ein Linearaktor 2 angeordnet. Der Linearaktor 2 wirkt zwischen den beiden Trägerplatten 51 und 52, sodass der Abstand a zwischen den beiden Trägerplatten 51 und 52 von der Auslenkung des Linearaktors 2 abhängt. Der Linearaktor 2 wird im Normalbetrieb kraftgeregelt betrieben, sodass die Aktorkraft zwischen den beiden Trägerplatten 51 und 52 wirkt. Wenn das Werkzeug 32 keinen Kontakt zu einer Oberfläche hat, drückt der Linearaktor 2 mit einer Soll-Aktorkraft gegen einen Endanschlag (nicht dargestellt). Der Aktor 2 kann ein pneumatischer Linearaktor sein und beispielsweise einen doppeltwirkenden Pneumatikzylinder beinhalten. Jedoch können auch andere pneumatische Aktoren verwendet werden wie z.B. Balgzylinder und Luftmuskel. Als Alternative kommen auch elektrische Direktantriebe (getriebelos) in Betracht.

Ein Motor 31 (z.B. ein Elektromotor) für den Antrieb des Werkzeugs 32 ist an der ersten Trägerplatte 51 montiert ist. Gemäß dem vorliegenden Beispiel kann der Motor 31 an der ersten Trägerplatte 51 angeflanscht sein, wobei die Motorwelle 33 durch die erste Trägerplatte 51 hindurchgeführt ist. Der Abstand zwischen den beiden Trägerplatten 51 und 52 wird durch eine Teleskopwelle 54 "überbrückt". Die Teleskopwelle 54 umfasst zwei Wellenteile (Hohlwelle/Hülse 541, Antriebswelle 543), die relativ zueinander verschiebbar sind. Ein erster Teil der beiden Wellenteile ist mit der Motorwelle 33 des Motors 31 gekoppelt (beispielsweise mittels einer Wellenkupplung), und ein zweiter Teil der beiden Wellenteile ist an der zweiten Trägerplatte 52 gelagert ist, beispielsweise mittels eines Wälzlagers. Alternativ zu Wälzlager können auch Gleitlager verwendet werden.

Die erwähnte Abtriebswelle 58 ist mit dem Teleskopwelle 54 über ein Getriebe gekoppelt, sodass die Motorwelle 33 die Teleskopwelle 54 und die Teleskopwelle (über das Getriebe) die Abtriebswelle 58 antreibt. Gemäß dem hier beschriebenen Ausführungsbeispiel ist das Getriebe ein Riementrieb. Mit dem zweiten (relativ zur ersten Trägerplatte beweglichen) Wellenteil der Teleskopwelle 54 ist eine erste Riemenscheibe 55 und mit der Abtriebswelle 58 ist eine zweite Riemenscheibe 56 gekoppelt. Die beiden Riemenscheiben 55 und 56 sind über einen Riemen (z.B. einen Keilriemen oder einen Zahnriemen) verbunden, sodass die Abtriebswelle 58 und damit auch das an dieser montierte Werkzeug 32 (z.B. eine Schleifscheibe) über die Teleskopwelle und den Riementrieb angetrieben wird. Alternativ zu dem Riementrieb kann auch ein Zahnradgetriebe oder eine beliebige andere Art von Getriebe verwendet werden, das an der zweiten Trägerplatte 52 angeordnet ist.

Die Antriebswelle 543 (zweiter Wellenteil) ist relativ zur Hohlwelle 541 (erster Wellenteil) entlang der Drehachse der Teleskopwelle 54 verschiebbar. In dem in Fig. 2 dargestellten Ausführungsbeispiel ist der zweite Wellenteil der Teleskopwelle 54 durch die zweite Trägerplatte 52 hindurchgeführt, wobei der zweite Wellenteil der Teleskopwelle 54 mittels eines Wälzlagers (z.B. ein Kugellager) an der zweiten Trägerplatte 52 gelagert werden kann. Der erste Wellenteil der Teleskopwelle 54 kann mit der Motorwelle 33 des Motors 31 mittels einer (z.B. starren) Wellenkupplung 53 fix verbunden sein. Wenn, wie im vorliegenden Beispiel, die der Motor 31 an die erste Trägerplatte 51 so angeflanscht ist, dass die Motorwelle 33 durch die Trägerplatte 51 hindurchgeführt ist, befindet sich die Wellenkupplung 53 zwischen den beiden Trägerplatten 51 und 52.

Damit der Linearaktor 2 ungehindert auf die zweite Trägerplatte 52 wirken kann, kann es sinnvoll sein, dass die Linearbewegung zwischen den beiden Wellenteilen der Teleskopwelle 54 entlang der Drehachse der Teleskopwelle 54 möglichst wenig Rückwirkung auf den Aktor hat. Deshalb können der erste Wellenteil und der zweite Wellenteil der Teleskopwelle 54 mittels eines Linearlagers 542 aneinander verschiebbar gelagert sein. Damit das Linearlager 542 eine (vernachlässigbar) geringe Haftreibung aufweist, kann es als Linearkugellager mit axialem Kugelumlauf (Kugelumlauflager) ausgebildet sein.

In dem vorliegenden Beispiel wirkt der Linearaktor 2 entlang einer Längsachse A'. Diese Achse A' kann koaxial zu einer Drehachse A" der Abtriebswelle 58 sein. Des Weiteren kann diese Längsachse A' des Linearaktors 2 auch an dem TCP des Manipulators 1 ausgerichtet sein, so dass TCP und Längsache A' (und auch Drehachse A") in einer Flucht liegen. In diesem Fall wirkt der Linearaktor 2 - wenn er am Endeffektorflansch eines Manipulators montiert ist - in einer Linie zwischen TCP des Manipulators und der Drehachse A" der Abtriebswelle 58, an der das Werkzeug 32 montiert ist, was die Biegemomentenbelastung von Linearaktor und Teleskopwelle reduziert.

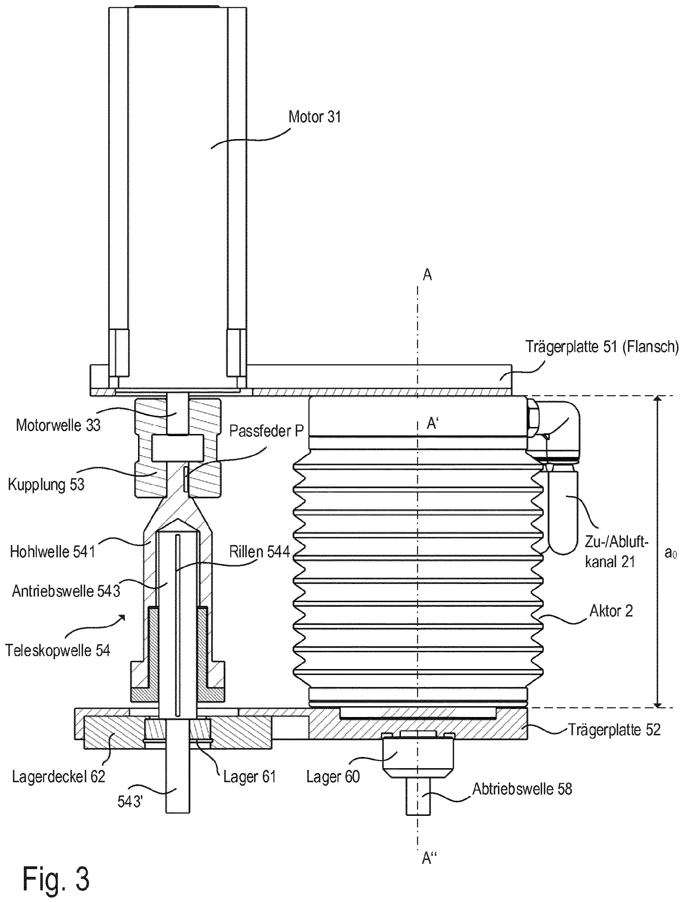

Figur 3 illustriert ein weiteres Ausführungsbeispiel einer Werkzeugmaschine, bei der Antriebsseite (Trägerplatte 51, Motor 31) und Werkzeugseite (zweiter Trägerplatte 52, Abtriebswelle 58, Getriebe) mittels eines Linearaktors 2 und einer Teleskopwelle 54 mechanisch entkoppelt sind. Diese Entkopplung entkoppelt die Dynamik der Komponenten auf der Antriebsseite inklusive des Manipulators von der Dynamik der Werkzeugseite. Das Ausführungsbeispiel aus Fig. 3 ist im Wesentlichen gleich aufgebaut wie das vorherige Beispiel aus Fig. 2, wobei der Riementrieb der Übersichtlichkeit halber weggelassen wurde. In Fig. 3 ist jedoch das Lager 61 zu sehen, an dem die Teleskopwelle 54 an der zweiten Trägerplatte 52 gelagert ist. Des Weiteren ist die Verbindung zwischen Teleskopwelle 54 und Wellenkupplung 53 genauer dargestellt (siehe Passfeder P). Die Kugel des Linearkugellagers sind nicht dargestellt, jedoch kann man die Rillen 544, in denen die Kugeln geführt sind, sehen.

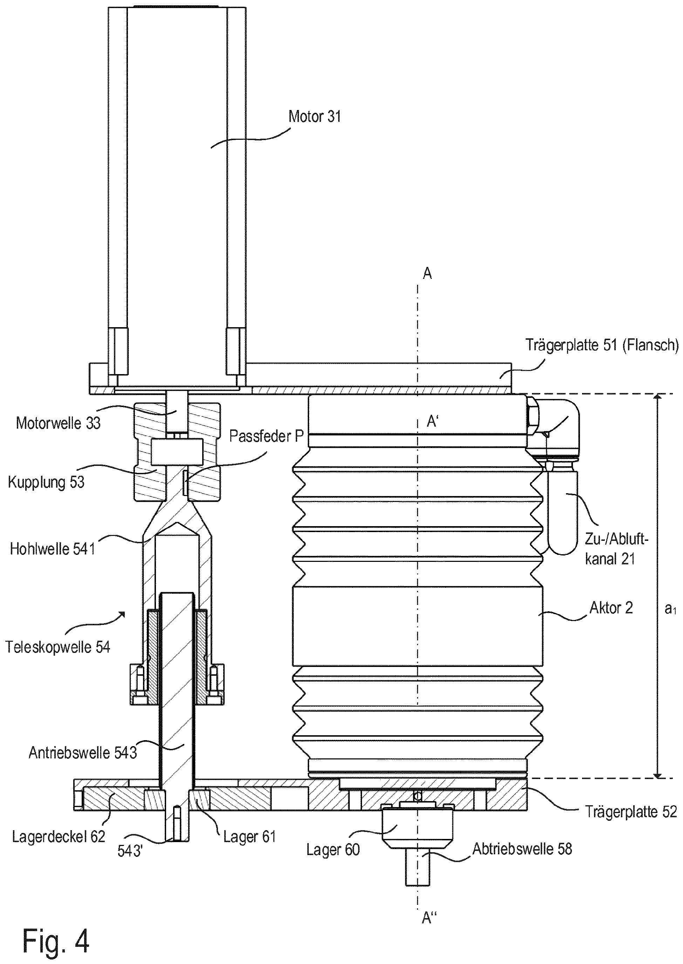

In dem in Fig. 3 dargestellten Beispiel ist der Linearaktor 2 mit minimaler Auslenkung dargestellt (Abstand a₀ zwischen den Trägerplatten 51 und 52 ist minimal). Figur 4 zeigt das gleiche Ausführungsbeispiel wie Fig. 3, wobei jedoch die Auslenkung a₁ des Linearaktors 2 größer ist als in Fig. 3. Im Übrigen ist das Beispiel aus Fig. 4 identisch mit dem vorherigen Beispiel aus Fig. 3 und die diesbezügliche Beschreibung wird deshalb nicht wiederholt.

Die hier beschriebenen Ausführungsbeispiele wurden mittels einer konkreten Auswahl aus vielen möglichen Komponenten (Maschinenelementen) realisiert. An dieser Stelle sei angemerkt, dass viele der für die Realisierung der hier dargestellten Ausführungsbeispiele verwendeten Komponenten durch andere Komponenten ersetzt werden können, die im Wesentlichen die gleiche oder eine ähnliche Funktion erfüllen. Beispielsweise können die in dem Ausführungsbeispiel gemäß Fig. 3 statt Wälzlager an einer oder mehreren Stellen auch Gleitlager verwendet werden, was beispielsweise bei höheren Drehzahlen sinnvoll sein kann. Des Weiteren kann der Riementrieb durch eine beliebige andere Art von Getriebe ersetzt werden beispielsweise durch ein Zahnradgetriebe. Auch wenn ein pneumatischer Linearaktor in vielen Anwendungen von Vorteil sein kann, kann in bestimmten Anwendungen auch ein anderer Aktor (z.B. ein elektrischer Aktor) verwendet werden. Auch die Wellenverbindungen müssen nicht notwendigerweise so realisiert werden, wie in den dargestellten Ausführungsbeispielen gemäß Fig. 2 und 3. Wenn Motorwelle 33 und Teleskopwelle 54 nicht koaxial sind, kann statt der Wellenkupplung 53 auch eine Verbindungswelle mit Kardangelenken eingesetzt werden. In Anbetracht dessen ist die vorliegende Erfindung nicht auf die dargestellten Ausführungsbeispiele beschränkt, sondern lediglich durch die folgenden Ansprüche.

## Patentansprüche

1. Vorrichtung für eine Werkzeugmaschine zum robotergestützten Bearbeiten von Oberflächen, die aufweist:
eine erste Trägerplatte (51) ausgebildet zur Montage an einem Manipulator und zur Montage eines Motors (31);
eine zweite Trägerplatte (52), an der eine Abtriebswelle (58) zur Aufnahme eins rotierbaren Werkzeugs (32) gelagert ist;
ein Linearaktor (2), der zwischen der ersten Trägerplatte (51) und der zweiten Trägerplatte (52) wirkt;
eine Teleskopwelle (54) mit einem ersten Teil und einem zweiten Teil, der relativ zum ersten Teil verschiebbar ist, wobei der erste Teil zum Koppeln mit einer Motorwelle (33) des Motors (31) ausgebildet ist und der zweite Teil an der zweiten Trägerplatte (52) gelagert ist;
ein Getriebe, welches die Teleskopwelle (54) mit der Abtriebswelle (58) koppelt.

2. Vorrichtung gemäß Anspruch 1,
wobei das Getriebe ein Riementrieb oder ein Zahnradgetriebe ist.

3. Vorrichtung gemäß Anspruch 1,
wobei eine erste Riemenscheibe (55) mit dem zweiten Teil der Teleskopwelle (54) gekoppelt ist und eine zweite Riemenscheibe (56) mit der Abtriebswelle (58) gekoppelt ist, und
wobei die zweite Riemenscheibe (56) mit der ersten Riemenscheibe (55) über einen Riemen (57) gekoppelt ist.

4. Vorrichtung gemäß einem der Ansprüche 1 bis 3,
wobei der zweite Teil der Teleskopwelle (54) durch die zweite Trägerplatte (52) hindurchgeführt ist.

5. Vorrichtung gemäß einem der Ansprüche 1 bis 4,
wobei der zweite Teil der Teleskopwelle (54) an der zweiten Trägerplatte (52) mittels eines Wälzlagers oder eines Gleitlagers gelagert ist.

6. Vorrichtung gemäß einem der Ansprüche 1 bis 5,
wobei die Motorwelle (33) und der erste Teil der Teleskopwelle (54) über eine Wellenkupplung (53) miteinander verbunden sind.

7. Vorrichtung gemäß einem der Ansprüche 1 bis 6,
wobei der erste Teil und der zweite Teil der Teleskopwelle (54) mittels eines Linearlagers (542) aneinander verschiebbar gelagert sind.

8. Vorrichtung gemäß Anspruch 7,
wobei das Linearlager (542) ein Linearkugellager mit axialem Kugelumlauf ist.

9. Vorrichtung gemäß einem der Ansprüche 1 bis 8,
wobei der Linearaktor (2) entlang einer Längsachse (A') wirkt, welche koaxial zu einer Drehachse (A") der Abtriebswelle (58) liegt.

10. Vorrichtung gemäß einem der Ansprüche 1 bis 9,
wobei der Linearaktor (2) einen Pneumatikzylinder aufweist, der dazu ausgebildet ist, während des Bearbeitens einer Oberfläche die Kontaktkraft (F_{K}) zwischen Werkzeug (32) und der Oberfläche zu einzustellen.

11. Vorrichtung gemäß einem der Ansprüche 1 bis 10,
wobei die erste Trägerplatte (51) so an dem Manipulator (1) montierbar ist, dass ein Tool-Center-Point (TCP) des Manipulators in einer Flucht mit der Drehachse (A") der Abtriebswelle (58) liegt.

12. Werkzeugmaschine zum robotergestützten Bearbeiten von Oberflächen, die aufweist:
eine Vorrichtung gemäß einem der Ansprüche 1 bis 11;
ein Motor (31), der an der ersten Trägerplatte (51) der Vorrichtung montiert ist und mit einer Motorwelle (33), die mit dem ersten Teil der Teleskopwelle (54) der Vorrichtung gekoppelt ist.

13. Manipulator mit einem Endeffektorflansch, an dem eine Vorrichtung gemäß einem der Ansprüche 1 bis 10 montiert ist.

14. Manipulator mit einem Endeffektorflansch, an dem eine Vorrichtung gemäß einem der Ansprüche 1 bis 10 montiert ist,
wobei die erste Trägerplatte (51) so an dem Manipulator (1) montierbar ist, dass ein Tool-Center-Point (TCP) des Endeffektorflansches des Manipulators (1) in einer Flucht mit der Drehachse (A") der Abtriebswelle (58) liegt.

15. Manipulator mit einem Endeffektorflansch, an dem eine Vorrichtung gemäß einem der Ansprüche 1 bis 10 montiert ist,
wobei die erste Trägerplatte (51) so an dem Manipulator (1) montierbar ist, dass ein Tool-Center-Point (TCP) des Endeffektorflansches des Manipulators (1) in einer Flucht mit der Drehachse (A") der Abtriebswelle (58) liegt, und
wobei ein Motor (31) an der ersten Trägerplatte (51) der Vorrichtung montiert ist und wobei eine Motorwelle (33) des Motors (31) mit dem ersten Teil der Teleskopwelle (54) der Vorrichtung gekoppelt ist.

## Claims

1. Device for a machine tool for robot-assisted surface-finishing, comprising:
a first carrier plate (51) designed to be mounted onto a manipulator and to be mounted onto a motor (31);
a second carrier plate (52) on which the output shaft (58) is mounted to receive a rotatable tool (32);
a linear actuator (2) acting between the first carrier plate (51) and the second carrier plate (52);
a telescopic shaft (54) having a first part and a second part movable with regards to the first part, wherein the first part is designed to be coupled with a motor shaft (33) of the motor (31) and the second part is mounted on the second carrier plate (52);
a drive coupling the telescopic shaft (54) to the output shaft (58).

2. Device according to claim 1,
wherein the drive is a belt drive or a gear drive.

3. Device according to claim 1;
wherein a first belt pulley (55) is coupled to the second part of the telescopic shaft (54) and a second belt pulley (56) is coupled to the output shaft (58), and
wherein the second belt pulley (56) is coupled to the first belt pulley (55) via a belt (57).

4. Device according to one of the claims 1 to 3,
wherein the second part of the telescopic shaft (54) is led through the second carrier plate (52).

5. Device according to one the claims 1 to 4,
wherein the second part of the telescopic shaft (54) is mounted on the second carrier plate (52) by means of a rolling bearing or a sliding bearing.

6. Device according to one of the claims 1 to 5,
wherein the motor shaft (33) and the first part of the telescopic shaft (54) are connected to each other via a shaft coupling (53).

7. Device according to one the claims 1 to 6,
wherein the first part and the second part of the telescopic shaft (54) are mounted onto each other in a movable manner by means of a linear bearing (542).

8. Device according to claim 7,
wherein the linear bearing (542) is a linear ball bearing having an axial ball circuit.

9. Device according to one of the claims 1 to 8,
wherein the linear actuator (2) acts along a longitudinal axis (A') which is coaxial to a rotation axis (A") of the output shaft (58).

10. Device according to one of the claims 1 to 9,
wherein the linear actuator (2) comprises a pneumatic cylinder which is designed to adjust the contact force (F_{K}) between the tool (32) and the surface during the surface-finishing.

11. Device according to one of the claims 1 to 10,
wherein the first carrier plate (51) is mountable onto the manipulator (1) such that a tool center point (TCP) of the manipulator is in alignment with the rotation axis (A") of the output shaft (58).

12. Machine tool for robot-assisted surface-finishing, comprising:
a device according to one of the claims 1 to 11;
a motor (31) mounted on the first carrier plate (51) of the device and having a motor shaft (33) coupled to the first part of the telescopic shaft (54) of the device.

13. Manipulator having an end effector flange on which a device according to one of the claims 1 to 10 is mounted.

14. Manipulator having an end effector flange on which a device according to one of the claims 1 to 10 is mounted,
wherein the first carrier plate (51) is mountable onto the manipulator (1) such that a tool center point (TCP) of the end effector flange of the manipulator (1) is in alignment with the rotation axis (A") of the output shaft (58).

15. Manipulator having an end effector flange on which a device according to one of the claims 1 to 10 is mounted,
wherein the first carrier plate (51) is mountable onto the manipulator (1) such that a tool center point (TCP) of the end effector flange of the manipulator (1) is in alignment with the rotation axis (A") of the output shaft (58), and
wherein a motor (31) is mounted on the first carrier plate (51) of the device and wherein a motor shaft (33) of the motor (31) is coupled to the first part of the telescopic shaft (54) of the device.

## Revendications

1. Dispositif pour une machine-outil assistée par un robot pour le traitement de surfaces, comprenant :
une première plaque de support (51) adaptée pour le montage à un manipulateur et pour le montage à un moteur (31) ;
une seconde plaque de support (52) sur laquelle est monté un arbre de sortie (58) destiné à recevoir un outil rotatif (32) ;
un actionneur linéaire (2) qui agit entre la première plaque de support (51) et la seconde plaque de support (52) ;
un arbre télescopique (54) ayant une première partie et une seconde partie déplaçable par rapport à la première partie, dans lequel la première partie est adaptée pour le couplage à un arbre moteur (33) du moteur (31) et la seconde partie est montée sur la seconde plaque de support (52) ;
une transmission qui couple l'arbre télescopique (54) avec l'arbre de sortie (58).

2. Dispositif selon la revendication 1,
dans lequel la transmission est une transmission par courroie ou une transmission par engrenages.

3. Dispositif selon la revendication 1,
dans lequel une poulie (55) est couplée avec la seconde partie de l'arbre télescopique (54) et une seconde poulie (56) est couplée avec l'arbre de sortie (58), et
dans lequel la seconde poulie (56) est couplée avec la première poulie (55) via une courroie (57).

4. Dispositif selon l'une des revendications 1 à 3,
dans lequel la seconde partie de l'arbre télescopique (54) passe à travers la seconde plaque de support (52).

5. Dispositif selon l'une des revendications 1 à 4,
dans lequel la seconde partie de l'arbre télescopique (54) est montée sur la seconde plaque de support (52) par le biais d'un roulement mécanique ou d'un palier lisse.

6. Dispositif selon l'une des revendications 1 à 5,
dans lequel l'arbre moteur (33) et la première partie de l'arbre télescopique (54) sont reliés l'un à l'autre via un accouplement d'arbre (53).

7. Dispositif selon l'une des revendications 1 à 6,
dans lequel la première partie et la seconde partie de l'arbre télescopique (54) sont montées l'une sur l'autre de façon coulissante par le biais d'un roulement linéaire (542).

8. Dispositif selon la revendication 7,
dans lequel le roulement linéaire (542) est un roulement à billes linéaire avec un circuit de billes axial.

9. Dispositif selon l'une des revendications 1 à 8,
dans lequel l'actionneur linéaire (2) agit le long d'un axe longitudinal (A') coaxial à l'axe de rotation (A") de l'arbre de sortie (58).

10. Dispositif selon l'une des revendications 1 à 9,
dans lequel l'actionneur linéaire (2) comprend un cylindre pneumatique adapté pour régler la force de contact (F_{K}) entre l'outil (32) et la surface pendant le traitement d'une surface.

11. Dispositif selon l'une des revendications 1 à 10,
dans lequel la première plaque de support (51) est montée sur le manipulateur (1) de telle manière qu'un Tool-Center-Point (TCP) du manipulateur est aligné avec l'axe de rotation (A") de l'arbre de sortie (58).

12. Machine-outil assistée par un robot pour le traitement de surfaces, comprenant :
un dispositif selon l'une des revendications 1 à 11 ;
un moteur (31) monté sur la première plaque de support (51) du dispositif et avec un arbre moteur (33) couplé avec la première partie de l'arbre télescopique (54) du dispositif.

13. Manipulateur avec une flasque effectrice d'extrémité sur laquelle est monté un dispositif selon l'une des revendications 1 à 10.

14. Manipulateur avec une flasque effectrice d'extrémité sur laquelle est monté un dispositif selon l'une des revendications 1 à 10,
dans lequel la première plaque de support (51) est montée sur le manipulateur (1) de telle manière qu'un Tool-Center-Point (TCP) de la flasque effectrice d'extrémité du manipulateur (1) est aligné avec l'axe de rotation (A") de l'arbre de sortie (58).

15. Manipulateur avec une flasque effectrice d'extrémité sur laquelle est monté un dispositif selon l'une des revendications 1 à 10,
dans lequel la première plaque de support (51) est montée sur le manipulateur (1) de telle manière qu'un Tool-Center-Point (TCP) de la flasque effectrice d'extrémité du manipulateur (1) est aligné avec l'axe de rotation (A") de l'arbre de sortie (58), et
dans lequel un moteur (31) monté sur la première plaque de support (51) du dispositif et dans lequel un arbre moteur (33) du moteur (31) est couplé avec la première partie de l'arbre télescopique (54) du dispositif.
